# EUROPÄISCHE PATENTSCHRIFT

(11) **EP 1 315 686 B1**
(45) Veröffentlichungstag und Bekanntmachung des Hinweises auf die Patenterteilung: **12.09.2007**
(21) Anmeldenummer: 01967012.4
(22) Anmeldetag: 24.08.2001
(51) Int. Cl.: C04B 35/16

(54) **KERAMIK**
CERAMIC MATERIAL
CERAMIQUE

(30) Priorität: 26.08.2000 DE 10042026
(43) Veröffentlichungstag der Anmeldung: 04.06.2003
(73) Patentinhaber: Forschungszentrum Jülich GmbH, 52425 Jülich (DE)
(72) Erfinder: BIEDENKOPF, Peter, 85614 Kirchseeon (DE); MÜLLER, Michael, 52146 Würselen (DE); HILPERT, Klaus, 52428 Jülich (DE); SINGHEISER, Lorenz, 52428 Jülich (DE)
(86) Internationale Anmeldenummer: PCT/DE2001/003157
(87) Internationale Veröffentlichungsnummer: WO 2002/018293

(56) Entgegenhaltungen:
- US-A- 2 598 904
- US-A- 3 798 040
- US-A- 6 093 366
- PATENT ABSTRACTS OF JAPAN vol. 1997, no. 11, 28. November 1997 (1997-11-28) & JP 09 175854 A (KYOCERA CORP), 8. Juli 1997 (1997-07-08)
- APARICIO M ET AL: "Colloidal Stability and Sintering of Yttria-Silica and Yttria-Silica-Alumina aqueous suspensions" JOURNAL OF THE EUROPEAN CERAMIC SOCIETY, ELSEVIER SCIENCE PUBLISHERS, BARKING, ESSEX, GB, Bd. 19, Nr. 9, Juli 1999 (1999-07), Seiten 1717-1724, XP004165939 ISSN: 0955-2219
- WEBSTER J D ET AL: "Oxidation Protection Coatings for C/SiC based on Yttrium Silicate" JOURNAL OF THE EUROPEAN CERAMIC SOCIETY, ELSEVIER SCIENCE PUBLISHERS, BARKING, ESSEX, GB, Bd. 18, Nr. 16, Dezember 1998 (1998-12), Seiten 2345-2350, XP004156970 ISSN: 0955-2219
- PATENT ABSTRACTS OF JAPAN vol. 1998, no. 09, 31. Juli 1998 (1998-07-31) & JP 10 087364 A (TOSHIBA CORP), 7. April 1998 (1998-04-07)

## Beschreibung

Die Erfindung bezieht sich auf eine Keramik, die mindestens ein Übergangsmetallsilikat und/oder Übergangsmetalldisilikat umfaßt.

Die weltweit erfaßten, gewinnbaren Reserven an nicht erneuerbaren (fossilen) Energierohstoffen betragen etwa 1200 Mrd. t SKE (SKE=Steinkohleeinheiten = 29,3 10⁹ J). Der beherrschende Energieträger ist die Kohle. Sie ist mit 49,2 % beteiligt, wovon 43,5 % auf Hartkohle und 5,7 % auf Braunkohle entfallen. Daher werden Verfahren zum Betreiben von kohlebefeuerten Gas- und Dampfkraftwerken (GuD-Kraftwerk) sowie anderer moderner Kraftwerke mittels Druckkohlenstaubfeuerungstechnologie (DKSF-Technologie) entwickelt. Die DKSF-Technologie beinhaltet im wesentlichen ein GuD-Kraftwerk, für das nicht Erdgas, sondern Kohle unter hohem Druck (10 bis 20 bar) verbrannt wird, und das unter Druck stehende, heiße Gas eine Gasturbine antreibt. Aufgrund der mineralischen Bestandteile der Kohle muß jedoch das entstehende "Rauchgas" gereinigt werden, bevor es in der Gasturbine zum Einsatz kommen kann. Insbesondere flüssige Schlackepartikel und dessen Hauptbestandteil, SiO₂, müssen abgetrennt werden. Derzeit ist hierfür ein Umlenksystem vorgesehen, bei dem das Rauchgas auf die Oberfläche keramischer Werkstoffe auftrifft, dort agglomeriert und einen flüssigen Film fließender Schlacke bildet, der dann über Gravitation abgeschieden und somit aus dem Rauchgasstrom entfernt wird. Das Umlenksystem beinhaltet somit Abscheidevorrichtungen beispielsweise in Form von Prallplatten oder Kugelschüttungen. Für die Flüssigascheabscheidung werden derzeit Cr₂O₃ oder schmelzgegossene, Cr₂O₃-haltige Keramiken eingesetzt, da Cr₂O₃ die einzige Keramik ist, die sich im Kontakt mit einer fließenden Kohleschlacke als ausreichend korrosionsresistent erwiesen hat. Die Stabilität des Chromoxides beruht auf der Tatsache, daß Cr₂O₃ mit dem Hauptbestandtteil der Kohleschlacke, SiO₂, keine chemischen Verbindungen eingeht und keine ternären Mischoxide ausbildet. Ähnliche Eigenschaften in Bezug auf die Reaktionen gegenüber SiO₂ wiesen bislang nur UO₂ und ThO₂ auf, die aber aufgrund ihrer Radioaktivität nicht zum Einsatz kamen.

Problematisch bei Cr₂O₃-haltigen Keramiken ist, daß diese unter Kraftwerksbedingungen ausgesprochen hohe Dampfdrücke aufweisen und verdampfen, wobei in oxidierender Atmosphäre die flüchtigen Spezies CrO₃ und CrO₂(OH)₂ entstehen. Unter DKSF-Bedingungen ist die Verdampfung noch intensiver, da zum einen deutlich höhere Temperaturen vorliegen, zum anderen die Chromverdampfung, bedingt durch Natrium- und Kaliumoxid aus der Kohleschlacke, noch um ca. eine Größenordnung intensiviert wird, so daß Cr₂O₃-haltige Keramiken auch auf Grund der krebserregenden Wirkung von abdampfenden Cr⁶⁺-Verbindungen nicht auf Dauer als geeignete Keramiken für die Flüssigascheabscheidung in Frage kommen.

Insbesondere für die DKSF-Technologie werden statt dessen Keramiken benötigt, die folgende Eigenschaften aufweisen:
1) Thermodynamische Stabilität und Korrosionsresistenz bei Temperaturen zwischen 1250 und 1500 °C in einer oxidierenden Rauchgasatmosphäre.
2) Geringe Löslichkeit und chemische Stabilität im Kontakt mit einer fließenden Kohleschlacke mit Bestandteilen wie: SiO₂, Al₂O₃, CaO, Fe₂O₃, MgO, K₂O und Na₂O.
3) Keine Bildung von flüchtigen, toxischen Produkten.

Aufgabe der Erfindung ist es somit, eine Keramik bereitzustellen, die langzeitstabil bei hohen Temperaturen in oxidativem und/oder feuchtem Milieu, insbesondere für die Abscheidung flüssiger Bestandteile aus Rauchgas in Kraftwerken und Müllverbrennungsanlagen, eingesetzt werden kann ohne das flüchtige, toxische Verbindungen freigesetzt werden. Chemische Reaktionen mit SiO₂ unterbleiben.

Die Aufgabe wird durch eine Keramik nach Anspruch 1 gelöst und umfaßt mindestens ein Übergangsmetallsilikat oder Übergangsmetalldisilikat.
Mit Übergangsmetall ist ein Metall gemäß der IUPAC-Nomenklatur (1985) gemeint. Dies können die Elemente der dritten bis zwölften Nebengruppe (Scandium bis Quecksilber, Ordnungszahlen 21-30, 39-48 und 57-80) des Periodensystems, also inklusive die Elemente der Lanthanoide (Lanthan bis Luthetium, Ordnungszahlen 57-71), sowie auch die Elemente der Actinoide (Actinium bis Lawrencium, Ordnungszahlen 89-103) sein.
Übergangsmetallsilikate bestehen aus mindestens einem Äquivalent Übergangsmetalloxid sowie einem Äquivalent SiO₂. Sie weisen wie die Übergangsmetalldisilikate mit dreiwertigem Übergangsmetall als oxidische Komponente eine Mischungslücke zu SiO₂ auf. Der Begriff Mischungslücke wird überwiegend bei der Beschreibung von Phasendiagrammen eingesetzt. So bildet auch Cr₂O₃ mit SiO₂ über den gesamten Variationsbereich (0 bis 100 % SiO₂ bzw. 100 bis 0 % Cr₂O₃) eine Mischungslücke aus, d.h., daß es im gesamten Phasendiagramm Cr₂O₃-SiO₂ nicht zur Bildung einer ternären Phase aus SiO₂ und Cr₂O₃ kommt. Oberhalb des Schmelzpunktes von SiO₂ (1725 °C) liegt also flüssiges SiO₂ neben festem Cr₂O₃, vor, ohne das es zu einer Reaktion kommt. Dies trifft auch für die beanspruchten Übergangsmetallsilikate und -disilikate zu, welche als Feststoff bei hohen Temperaturen nicht mit SiO₂ reagieren.

Vorteilhaft ist die Keramik durch ein Übergangsmetall aus der dritten oder vierten Nebengruppe des Periodensystems oder aus der Gruppe der Lanthanoide gekennzeichnet (Anspruch 2). Diese sind bei Temperaturen höher als 1300 °C in feucht-oxidativem Milieu stabil.

In Ausbildung der Erfindung ist gemäß Anspruch 3 die Keramik durch ein Silikat der Formel M₂SiO₅ oder M₂Si₂O₇ gekennzeichnet (mit M = Übergangsmetall). Der Begriff Silikat umfaßt entsprechend Mono- bzw. Disilikate mit einem Übergangsmetalloxid der Formel M₂O₃ und einem (bei Übergangsmetallsilikaten) bzw. zwei (bei Übergangsmetalldisilikaten) Äquivalenten SiO₂. Das Übergangsmetall liegt im dreiwertigen Zustand vor.

Besonders vorteilhaft umfaßt die Keramik Scandium, Yttrium, Lanthan, Cer, Samarium und/oder Dysprosium, vorliegend als Metalloxid (Anspruch 4). Mit diesen Verbindungen sind Mono- bzw. Disilikate erhältlich, die sich empirisch als äußerst stabil bei Temperaturen höher als 1300 °C erwiesen haben. Die Metalloxide sind preiswert bzw. kommerziell leicht erhältlich. Mischungen verschiedener Metalle innerhalb einer Keramik sind möglich.

Es wurde gefunden, daß eine Keramik auch durch ein Silikat der Formel MSiO₄ (mit M = Übergangsmetall) gekennzeichnet sein kann (Anspruch 5). Das Übergangsmetall liegt dann in vierwertigem Zustand im Metalloxid (MO₂) vor, und das Silikat enthält daneben ein Äquivalent SiO₂.

Ist die Keramik durch Zirconium und/oder Hafnium, vorliegend als Metalloxid (Anspruch 6) gekennzeichnet, so liegen besonders korrosionsbeständige und bei hohen Temperaturen langzeitstabile Monosilikate vor. Bei Verwendung mehrerer verschiedener vierwertiger Übergangsmetalloxide sind, wie bei Verwendung mehrerer verschiedener dreiwertiger Übergangsmetalloxide, auch Mischungen der Übergangsmetallsilikate in einer Keramik möglich.

In einer weiteren Ausgestaltung der Erfindung enthält die Keramik 50 bis 66 mol% SiO₂ (Anspruch 7). Dann sind neben den bereits genannten Mischungen aus Mono- oder Disilikaten in einer Keramik auch Mischungen aus Mono- und Disilikaten in einer Keramik möglich. Dadurch ist man äußerst variabel in der Wahl der Ausgangsverbindungen und kann zudem ein breites Spektrum an Mono- und/oder Disilikaten synthetisieren.

Besonders vorteilhaft ist die Keramik durch einen Schmelzpunkt größer als 1500 °C gekennzeichnet (Anspruch 8). Dann ergeben sich für diese hochtemperaturbeständigen Keramiken technische Anwendungsfelder, die bisher noch gar nicht erschlossen werden konnten, z.B. die Flüssigascheabscheidung bei der Druckkohlenstaubfeuerung (DKSF).

In einer weiteren Ausgestaltung der Erfindung umfaßt die Keramik eine Feuerfestkeramik, die mit Übergangsmetallsilikat und/oder Übergangsmetalldisilikat oberflächenbeschichtet ist (Anspruch 9). Die Feuerfestkeramik umfaßt dann eine Schutzschicht mit den eingesetzten Übergangsmetallsilikaten und/oder Übergangsmetalldisilikaten. Als Verfahren für die Oberflächenbeschichtung bieten sich z.B. das heiß isostatische Pressen (HIP), das kalt isostatische Pressen oder das Sintern an. Somit sind mit Übergangsmetallsilikat bzw. -disilikat beschichtete Feuerfestkeramiken erhältlich, mit denen gegenüber der bisher verwendeten Keramik aus Cr₂O₃-Vollmaterial erheblich Material und Kosten eingespart werden können.

Vorteilhaft umfassen Abscheidevorrichtungen, insbesondere zur Flüssigascheabscheidung in der Druckkohlenstaubfeuerungstechnologie eine solche Keramik (Anspruch 10). Mit Abscheidevorrichtung sind Schüttungen, Prallplatten, poröse Keramiken und andere gemeint, wobei man in der Wahl der Geometrien nicht festgelegt ist. Es ist also unerheblich, ob man Kugelschüttungen oder anders gestaltete Geometrien verwendet. Abscheidevorrichtungen wie Schüttungen, Prallplatten oder poröse Keramiken, die eine solche Keramik umfassen, ermöglichen die Flüssigascheabscheidung ohne Freisetzung flüchtig-giftiger Komponenten.

Besonders vorteilhaft umfaßt ein kohlebetriebenes Gas- und Dampfkraftwerk eine solche Keramik (Anspruch 11). Dadurch wird die DKSF-Technologie auch für Gas- und Dampfkraftwerke anwendbar.

Weiterhin können Schmelzwannen, insbesondere für die Verglasungstechnologie, solche Keramiken umfassen (Anspruch 12). Dadurch können toxische Inhaltsstoffe in Filteraschen aus der Müllverbrennung fixiert werden. Man nutzt dabei den Umstand, daß die Übergangsmetallsilikate und/oder -disilikate chemisch innert gegenüber SiO₂ sind.
Es ist auch vorstellbar, eine Keramik mit Übergangsmetallsilikat und/oder Übergangsmetalldisilikat, auf Grund ihrer elektrisch isolierenden Eigenschaften, als Dicht- und Isolationsmaterial im Randbereich von Brennstoffzellen oder -Stapeln zu verwenden.

Aufgabe der Erfindung ist es weiterhin, ein Verfahren zum Betreiben eines kohlebefeuerten Gas- und Dampfkraftwerkes bereitzustellen (Anspruch 13). Dabei werden
- Brennmittel unter Druck verbrannt;
- das heiße Gas wird auf eine Abscheidevorrichtung, die eine Keramik mit Übergangsmetallsilikat und/oder Übergangsmetalldisilikat umfaßt, geleitet;
- die flüssigen Partikel werden entfernt.

Die Keramiken können Übergangsmetallsilikate (ein oder mehrere Monosilikate), Übergangsmetalldisilikate (ein oder mehrere Disilikate) oder auch Mischungen aus Mono- und Disilikaten umfassen. Durch die Mischungslücke zu SiO₂, dem Hauptbestandteil der Kohleschlacke, erfolgt dessen effiziente Entfernung durch Agglomeration aus dem Rauchgas, wodurch auch Gas- und Dampfkraftwerke mit Kohle ohne Freisetzung toxischer Spezies befeuert werden können (Druckkohlenstaubfeuerung).

Ein Verfahren zum Betreiben eines Kohle-, Holz-, Biomasse- oder Klärschlammvergasers ist durch die Schritte gekennzeichnet:
- Brennmittel werden unterstöchiometrisch verbrannt oder vergast,
- das heiße Gas wird auf eine Abscheidevorrichtung, die eine Keramik mit Übergangsmetallsilikat und/oder Übergangsmetalldisilikat umfaßt, geleitet,
- die flüssigen Partikel werden entfernt (Anspruch 14).
Mit unterstöchiometrisch ist eine Verbrennung oder Vergasung im Sauerstoffunterschuß gemeint, wobei das entstehende Schwachgas (CO, CH₄, H₂) thermisch zur Energiegewinnung umgesetzt werden kann. Der Vorteil besteht darin, daß die Nutzung vieler Brennstoffe, beispielsweise auch Stroh, ermöglicht wird.

Ein Verfahren zum Betreiben einer Entsorgungsanlage für Filteraschen aus Müllverbrennungsanlagen besteht darin, daß
- Asche aus Müllverbrennungsanlagen in einer Schmelzwanne, die eine Keramik mit Übergangsmetallsilikat und/oder Übergangsmetalldisilikat umfaßt, über den Schmelzpunkt der Filterasche erhitzt wird,
- und die Filteraschen verglast werden (Anspruch 15).
Keramiken mit Übergangsmetallsilikat und/oder Übergangsmetalldisilikat können also überall dort eingesetzt werden, wo flüssige, SiO₂-reiche Schlacke aus einem Rauchgasstrom bei hohen Temperaturen abgeschieden werden muß, oder wo ein keramischer Werkstoff bei hohen Temperaturen im Kontakt mit einer SiO₂-reichen Flüssigkeit steht.

Als Ausführungsbeispiel für eine hochschmelzende Keramik mit einem Mono- und einem Disilikat sei ein im Verhältnis 1:1 eingesetztes Gemisch aus Y₂SiO₅, und Y₂Si₂O₇ genannt, wobei eine solche Keramik einen SiO₂ Anteil von 58 mol% SiO₂ aufweist. Die Keramik kann durch Reaktionssintern mit anschließendem heiß isostatischen Pressen hergestellt werden. Die so entstandene Keramik hat den Vorteil, daß die monosilikatische Komponente im Kontakt mit einer silikatreichen Flüssigkeit SiO₂ aufnehmen kann, wodurch die Oberflächenporosität der Keramik in situ minimiert wird. Dies erhöht die Korrosionsstabilität der Keramik und minimiert das Eindringen der Schlacke in den Festkörper.

## Patentansprüche

1. Verfahren zur Abscheidung SiO₂-reicher Schlacken aus einem Rauchgasstrom unter Verwendung einer Keramik mit mindestens einem Übergangsmetallsilikat und/oder Übergangsmetalldisilikat und unter Ausnutzung einer Mischungslücke zwischen dem Übergangsmetalleilikat und/oder dem Übergangsmetalldisilikat und dem SiO₂ der Schlacke.

2. Verfahren nach Anspruch 1,
**gekennzeichnet durch**
ein Übergangsmetall aus der dritten oder vierten Nebengrupppe des Periodensystems oder aus der Gruppe der Lanthanoide.

3. Verfahren nach einem der vorhergehenden Ansprüche,
**gekennzeichnet durch**
ein Silikat der Formel M₂SiO₅ oder M₂Si₂O₇
mit M = Übergangsmetall.

4. Verfahren nach einem der vorhergehenden Ansprüche, umfassend Scandium, Yttrium, Lanthan, Cer, Samarium und/oder Dysprosium, vorliegend als Metalloxid.

5. Verfahren nach einem der Ansprüche 1 oder 2,
**gekennzeichnet durch**
ein Silikat der Formel MSiO₄
mit M = Übergangsmetall

6. Verfahren nach Anspruch 5,
**gekennzeichnet durch**
Zirconium und/oder Hafnium vorliegend als Metalloxid.

7. Verfahren nach einem der vorhergehenden Ansprüche,
**gekennzeichnet durch**
die Verwendung einer Keramik, die 50 bis 66 mol% SiO₂ enthält.

8. Verfahren nach einem der vorhergehenden Ansprüche,
**gekennzeichnet durch**
Verwendung einer Keramik mit einem Schmelzpunkt größer als 1500 °C.

9. Verfahren nach einem der vorhergehenden Ansprüche,
**dadurch gekennzeichnet, daß**
die Abscheidung SiO₂-reicher Schlacke aus dem Rauchgas eines kohlebefeuerten Gas- und Dampfkraftwerkes erfolgt.

10. Verfahren nach Anspruch 9,
**gekennzeichnet durch** die Schritte:
Brennmittel wird unter Druck verbrannt,
- das heiße Gas wird auf eine Abscheidevorrichtung, die eine Keramik mit Übergangsmetallsilikat und/oder Übergangsmetalldisilikat umfaßt, geleitet,
- die flüssigen Partikel werden entfernt.

11. Verfahren nach einem der Ansprüche 9 oder 10,
**gekennzeichnet durch**
Einsatz der Druckkohlenstaubfeuerungstechnologie.

12. Verfahren nach einem der Ansprüche 1 bis 8,
**dadurch gekennzeichnet, daß**
die Abscheidung SiO₂-reicher Schlacke aus dem Rauchgas eines Kohle-, Holz-, Biomasse- oder Klärschlammvergasers erfolgt.

13. Verfahren nach Anspruch 12,
**gekennzeichnet durch** die Schritte:
- Brennmittel werden unterstöchiometrisch verbrannt oder vergast,
- das heiße Gas wird auf eine Abscheidevorrichtung, die eine Keramik mit Übergangsmetallailikat und/oder Übergangsmetalldisilikat umfaßt, geleitet,
- die flüssigen Partikel werden entfernt.

14. Verfahren nach einem der Ansprüche 1 bis. 8,
**dadurch gekennzeichnet, daß**
die Abscheidung SiO₂-reicher Schlacke aus dem Rauchgas einer Entsorgungsanlage für Filteraschen aus Müllverbrennungsanlagen erfolgt.

15. Verfahren nach Anspruch 14,
**gekennzeichnet durch** die Schritte
- Asche aus Müllverbrennungsanlagen wird in einer Schmelzwanne, die eine Keramik mit Übergangsmetallsilikat und/oder Übergangsmetalldisilikat umfaßt, über den Schmelzpunkt der Filterasche erhitzt,
- die Filteraschen werden verglast.

## Claims

1. Method for separating SiO₂ rich slag from a flue gas stream using a ceramic material with at least one transition metal silicate and / or transition metal disilicate and using a miscibility gap between the transition metal silicate and / or transition metal disilicate and the SiO₂ of the slag.

2. Method according to claim 1,
**characterised by**
a transition metal from the third or fourth sub-group of the periodic table or from the lanthanoids group.

3. Method according to one of the foregoing claims,
**characterised by**
a silicate with the formula M₂SiO₅ or M₂Si₂O₇
with M = transition metal.

4. Method according to one of the foregoing claims,
incorporating scandium, yttrium, lanthanum, cerium, samarium and / or dysprosium, present as metal oxide.

5. Method according to one of claims 1 or 2,
**characterised by**
a silicate with the formula MSiO₄
with M = transition metal.

6. Method according to claim 5,
**characterised by** zirconium and / or hafnium being present as metal oxide.

7. Method according to one of the foregoing claims,
**characterised by**
using a ceramic material containing 50 to 66 mol% SiO₂

8. Method according to one of the foregoing claims,
**characterised by**
using a ceramic material with a melting point higher than 1500°C.

9. Method according to one of the foregoing claims,
**characterised in that**
the separation of SiO₂ rich slag is effected from the flue gas of a coal fired gas and steam power plant.

10. Method according to claim 9,
**characterised by** the steps:
- the fuel is combusted under pressure,
- the hot gas is conveyed to a separation device, which incorporates a ceramic material with transition metal silicate and / or transition metal disilicate,
- the liquid particles are removed.

11. Method according to one of claims 9 or 10,
**characterised by**
the use of pressurized pulverized coal combustion technology.

12. Method according to one of claims 1 to 8,
**characterised in that**
the separation of SiO₂ rich slag is effected from the flue gas of a coal, wood, biomass or sewage sludge gasifier.

13. Method according to claim 12,
**characterised by** the steps:
- fuels are substoichiometrically combusted or gasified,
- the hot gas is conveyed to a separation device, which incorporates a ceramic material with transition metal silicate and / or transition metal disilicate,
- the liquid particles are removed.

14. Method according to one of claims 1 to 8,
**characterised in that**
the separation of SiO₂ rich slag is effected from the flue gas of a disposal facility for filter ash from waste incinerators.

15. Method according to claim 14,
**characterised by** the steps:
- ash from waste incinerators is heated above the melting point of the filter ash in a melting tank, which incorporates a ceramic material with transition metal silicate and / or transition metal disilicate,
- the filter ash is vitrified.

## Revendications

1. Procédé pour séparer des scories riches en SiO₂ d'un courant de gaz de fumée, en utilisant une céramique comprenant au moins un silicate de métal de transition et/ou un disilicate de métal de transition et en tirant parti d'une lacune de miscibilité entre le silicate de métal de transition et/ou le disilicate de métal de transition et le SiO₂ des scories.

2. Procédé suivant la revendication 1,
**caractérisé par**
un métal de transition du troisième ou du quatrième sous groupe de la classification périodique des éléments ou du groupe des lanthanides.

3. Procédé suivant l'une des revendications précédentes,
**caractérisé par**
un silicate de formule M₂SiO₅ ou M₂Si₂O₇, M étant un métal de transition.

4. Procédé suivant l'une des revendications précédentes,
comprenant du scandium, de l'yttrium, du lanthane, du cérium, du samarium et/ou du dysprosium, présent sous forme d'oxyde métallique.

5. Procédé suivant l'une des revendications 1 ou 2,
**caractérisé par**
un silicate de formule MsiO₄, M étant un métal de transition.

6. Procédé suivant la revendication 5,
**caractérisé par**
du zirconium et/ou de l'hafnium présent sous la forme d'oxyde métallique.

7. Procédé suivant l'une des revendications précédentes,
**caractérisé par**
l'utilisation d'une céramique qui contient de 50 à 66 % en mole de SiO₂ .

8. Procédé suivant l'une des revendications précédentes,
**caractérisé par**
l'utilisation d'une céramique ayant un point de fusion plus grand que 1500 degrés C.

9. Procédé suivant l'une des revendications précédentes,
**caractérisé en ce que**
l'on effectue la séparation de scories riches en SiO₂ du gaz de fumée d'une centrale électrique à gaz et à vapeur alimentée au charbon.

10. Procédé suivant la revendication 9,
**caractérisé par** les stades :
- on brûle du combustible sous pression ;
- on envoie le gaz chaud à un dispositif de séparation, qui comprend une céramique ayant un silicate de métal de transition et/ou un disilicate de métal de transition ;
- on élimine les particules liquides.

11. Procédé suivant l'une des revendications 9 ou 10,
**caractérisé par** l'utilisation d'une technologie à foyer au charbon pulvérisé sous pression.

12. Procédé suivant l'une des revendications 1 à 8,
**caractérisé en ce que**
l'on effectue la séparation de scories riches en SiO₂ du gaz de fumée d'un gazogène au charbon, au bois, à la biomasse ou à la boue de clarification.

13. Procédé suivant la revendication 12,
**caractérisé par** les stades :
- on brûle hypostoechiométriquement ou on gazéifie du combustible ;
- on envoie du gaz chaud sur un dispositif de séparation, qui comprend une céramique de silicate de métal de transition et/ou de disilicate de métal de transition ;
- on élimine les particules liquides.

14. Procédé suivant l'une des revendications 1 à 8,
**caractérisé en ce que**
l'on effectue la séparation de scories riches en SiO₂ du gaz de fumée d'une installation d'élimination des cendres de filtre d'installations d'incinération des ordures.

15. Procédé suivant la revendication 14,
**caractérisé par** les stades :
- on chauffe des cendres d'installations d'incinération des ordures dans une cuve de fusion, qui contient une céramique ayant un silicate de métal de transition et/ou un disilicate de métal de transition, au dessus du point de fusion de la cendre de filtre ;
- on vitrifie les cendres de filtre.
